# EUROPEAN PATENT APPLICATION

(11) **EP 2 803 892 A1**
(43) Date of publication of application: **19.11.2014**
(21) Application number: 13460031.1
(22) Date of filing: 13.05.2013
(51) Int. Cl.: F16L 9/147

(54) **Protection tube for pre-insulated products**

(71) Applicant: Zaklad Produkcyjno Uslugowy Miedzyrzecz Polskie Rury Preizolowane SP. Z O.O., 66-300 Miedzyrzecz (PL)
(72) Inventor: Górczynski, Henryk, 66-300 Miedzyrzecz (PL)
(74) Representative: Kujanek, Wlodzimierz

(57) **Abstract**

A casing pipe for pre-insulated products comprising between two layers of plastic material a barrier layer for preventing gas diffusion. The barrier layer has the form of rolled metal foil. The barrier layer of metal foil has a thickness of at least 40 µm.

## Description

Subject of the invention is a protection tube to pre-insulated products.

Renowned for notification EP 0634602 is a casing pipe in the form of thermally insulated carrier pipe, which consists of the inner tube made of plastic material, concentrically disposed in relation to the outer tube and an insulating layer from foamed plastic material based on polyurethane, filling the annular space between the inner and outer tube. Gas diffusion barier layer constitutes foil surrounding the insulating layer. As an alternative to this solution a metal strip is applied, preferably aluminum strip, whose task is among other things to create a barrier to gas permeation, inhibitory to a large extent of the diffusion of gas.

From application EP 2340929 known is the casing pipe in the form of pre-insulated pipe consisting of a carrier pipe, in particular of steel, the outer tube of plastic material serving as a mechanical outer casing and an insulating material filling of the annular space between the carrier pipe and the outer tube, serving as termic insulation. The outer tube is formed as a multilayer pipe and has in its interior integrated in the outer pipe the barrier layer built of ethylene-vinyl alcohol EVOH copolymer.

A disadvantage of known casing pipes is that the barrier layer does not effectively prevents the diffusion of gases. The described construction of casing pipes also do not provide an effective long-term thermal insulation by protecting them against permeation through a layer of plastc materials gases, in particular the oxygen and, and do not effectively prevent the escape of carbon dioxide to the outside.

Free from the disadvantages described is casing pipe comprising between two layers of plastic material barrier layer for gas diffusion built of rolled metal foil. Preferably, the barrier layer of the rolled metal foil has a thickness of at least 40 µm.

Rolled metal foil provides a sufficient limitation of the gases diffusion, either from the direction of the pipe on the outside as well as from the outside to the inside of the pipe.

An embodiment of the casing pipe to insulated products according to the invention.

Protection tube constructed of manufactured by extrusion processing of a thin-walled primary tube, forming an outher layer with a wall thickness of 1.5 mm of tubular polyethylene PEHD or PE100 type, chich cooled down to the temperature of 55°C is coated with rolled metal foil with a thickness of 80 µm. Then, in a continuous extrusion process on the foil is applied an outer layer thickness 2 mm of polyethylene the same type as In the manufacturing of the inner layer.

## Claims

1. Protection tube for pre-insulated products containing between two layers made of plastic material the barrier layer for gas diffusion, **characterized in, that** the barrier layer is in the form of rolled metal foil.

2. Casing pipe according to claim 1, **characterized in that** the barrier layer has a thickness of at least 40 µm.
